# EUROPEAN PATENT APPLICATION

(11) **EP 2 993 631 A1**
(43) Date of publication of application: **09.03.2016**
(21) Application number: 15182910.8
(22) Date of filing: 28.08.2015
(51) Int. Cl.: G06Q 10/08

(54) **VERIFICATION OF MATERIAL**

(30) Priority: 01.09.2014 GB 201415434
(71) Applicant: Promtek Limited, Staffordshire ST8 7QJ (GB)
(72) Inventor: WILLIAMS, Charles Maxwell, Stoke-on-Trent, Staffordshire ST8 7QJ (GB)
(74) Representative: Swindell & Pearson Limited

(57) **Abstract**

A method (200), apparatus (100, 300, 600, 700), system (1100) and computer program is disclosed. A first signal (102) comprising a first code (103) representing a composition of a first material (306, 602) is received from a first source (301). The first code is compared to a second code (104), generated by analysing the first material, to determine if the first code matches the second code. A first output (105) is provided, indicating that the analysed first material is verified as being the first material, only when the first code matches the second code. Weighing of the first material is enabled, dependent upon the first code matching the second code

## Description

### FIELD OF THE INVENTION

Embodiments of the present invention relate to verification of material. In particular, they relate to methods, apparatuses and a system for verification of material to be used in a production process.

### BACKGROUND TO THE INVENTION

Apparatuses are known for manually weighing out required weights of specified materials that are to be mixed in a production process to produce a formulation. For example, such a formulation may be used in the preparation of a pharmaceutical, or the production of food.

### BRIEF DESCRIPTION OF VARIOUS EMBODIMENTS OF THE INVENTION

According to various, but not necessarily all, embodiments of the invention there is provided a method as claimed in claim 1.

This provides the advantage that a material may be verified as the required material for example for a production process at the point where it is to be used.

In some embodiments, the second code is received from equipment configured to analyse materials and generate codes depending upon chemical composition of the materials. The equipment may comprise a spectrometer, which may be a near infrared spectrometer.

In some embodiments, the method comprises enabling weighing of the first material dependent upon the first code matching the second code. In some embodiments, the first output indicates that the first material may be mixed with a second material in a mixing process.

In some embodiments, the first code is a previously recorded code generated by analysing the first material. The previously recorded code may be generated at a first location, and the second code may be generated at a second location. In some embodiments, the first code is previously recorded in a database and the first code is received from the database.

In some embodiments, the first code is previously recorded in a barcode and the first source is a barcode scanner. The barcode may be a two dimensional barcode. The barcode may be located on, or within, packaging of the analysed first material. In some embodiments, the first code is generated by a process comprising spectroscopy. In some embodiments, the first code and the second code are generated by analysing the first material by a process comprising near infrared spectrometry

In some embodiments, the first code is generated at a first location by analyzing a batch of a first material, and the first code is dependent upon the chemical composition of the analysed batch of the first material; and the second code is generated at a second location by analyzing a batch of a first material, and the second code is dependent upon the chemical composition of the analysed batch of the first material.

According to various, but not necessarily all, embodiments of the invention there is provided a method comprising: receiving a first signal comprising a first code from a first source, the first code representing a composition of a first material; comparing the first code to a second code, generated by analysing the first material, to determine if the first code matches the second code; and providing a first output, indicating that the analysed first material is verified as being the first material, only when the first code matches the second code.

According to various, but not necessarily all, embodiments of the invention there is provided an apparatus as claimed in claim 11.

The apparatus may be for the verification of a material. In some embodiments, the apparatus is configured to receive the second code from equipment configured to analyse materials and generate codes depending upon chemical composition of the materials. The equipment may comprise a spectrometer, which may comprise a near infrared spectrometer.

In some embodiments, the first output indicates that the first material may be mixed with a second material in a mixing process. In some embodiments, the first source is a barcode scanner. In some embodiments, the apparatus is configured to receive the first code from a database.

In some embodiments, the apparatus is configured to provide the first output to a gate mechanism configured to allow passage of the first material only on receipt of the first output.

According to various, but not necessarily all, embodiments of the invention there is provided a system as claimed in claim 14.

In some embodiments of the system, the apparatus further comprises equipment comprising a spectrometer and said equipment is configured to generate the second code, the further apparatus is located at a first location, and the apparatus is located at a second location.

In some embodiments of the system, the further apparatus is configured record the first code in a barcode and the first source is a barcode scanner. The barcode scanner may be configured to read two dimensional barcodes. The barcode may be located on, or within, packaging of the analysed first material.

According to various, but not necessarily all, embodiments of the invention there is provided a computer readable storage medium as claimed in claim 15.

According to various, but not necessarily all, embodiments of the invention there is provided a method of indicating a composition of a material, comprising: analysing a batch of material to generate a code dependent upon chemical composition of the material; and processing the code to generate a barcode.

In some embodiments, the method comprises printing the barcode and wherein the printed barcode is provided on, or within packaging of the batch of material. In some embodiments, the barcode is a two dimensional barcode.

According to various, but not necessarily all, embodiments of the invention there is provided an apparatus comprising a controller configured to process a code dependent upon chemical composition of an analysed material to generate a barcode.

The apparatus may be for generating a barcode for the verification of a material. In some embodiments, the apparatus further comprises a printer configured to print the barcode. In some embodiments, the apparatus further comprises a spectrometer configured to analyse material and said apparatus is further configured to generate said code.

According to various, but not necessarily all, embodiments of the invention there is provided a computer readable storage medium comprising a computer program that when run on a computer performs a method of indicating a composition of a material, comprising: analysing a batch of material to generate a code dependent upon chemical composition of the material; and processing the code to generate a barcode.

### BRIEF DESCRIPTION OF THE DRAWINGS

For a better understanding of various examples of embodiments of the present invention reference will now be made by way of example only to the accompanying drawings in which:
Fig. 1 shows an apparatus 100 for verifying that a first material is a required first material;
Fig. 2 shows a method 200 for verifying that a first material is a required first material;
Fig. 3 shows an apparatus 300 comprising the controller 101 of Fig. 1, a barcode scanner 301 and an analyser 302;
Fig. 4 shows a method 400 of verifying a first material as a required first material;
Fig. 5 shows an example apparatus 500 comprising a personal computer;
Fig. 6 shows an example apparatus 600 for verifying material to be used in a production process;
Fig. 7 shows another example apparatus 700 for verifying material to be used in a production process;
Fig. 8 shows an example of a process for verifying materials to be used in a production process;
Fig. 9 shows an apparatus 900 configured to process a code dependent upon chemical composition of an analysed material 910 to generate a barcode 911;
Fig. 10 shows a flow chart outlining a method 1000 of indicating a composition of a material;
Fig. 11 shows a system 1100 for verifying that a material is a required material; and
Fig. 12 shows a flowchart of a method 1200 of verifying that a selected first material is a required first material.

### DETAILED DESCRIPTION OF VARIOUS EMBODIMENTS OF THE INVENTION

The Figures illustrate examples of an apparatus 100 comprising a controller 101 configured to receive a first signal 102 comprising a first code 103 from a first source indicating a composition of a first material, compare the first code 103 to a second code 104, generated by analysing the first material, to determine if the first code matches the second code, and provide a first output 105, indicating that the first material is verified as being the first material, only when the first code matches the second code.

This provides the advantage that the apparatus 100 is able to provide an output that provides verification that the analysed first material is the same first material whose composition is indicated in the second code. This is useful, for example, in production processes where materials are to be mixed to produce a specific formulation, such as in food production, pharmaceutical production, etc. For example, several different powdered materials may be required to be added in relatively small quantities to a large mixture, and this may involve manually weighing out the required mass of each of the powdered materials and adding to the mixture. A problem that may occur in such a process is that an incorrect material may be accidently used, and this can result in the whole mixture being made worthless. This could occur in a case where the person performing the weighing makes an error when selecting a material or in a case where a material being used has previously been contaminated or incorrectly labelled. By verifying that the material is the correct material at the time that it is to be added to the mixture may therefore prevent such a problem.

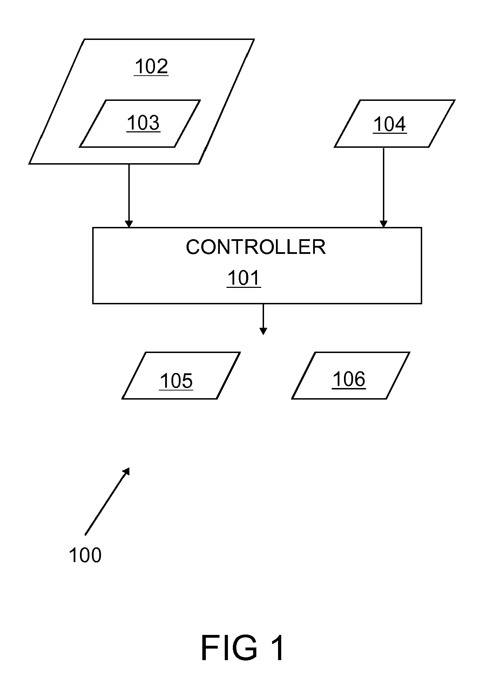

Fig. 1 shows an apparatus 100 comprising a controller 101 configured to receive a first signal 102 comprising a first code 103 from a first source indicating a composition of a first material, compare the first code 103 to a second code 104, generated by analysing the first material, to determine if the first code matches the second code, and provide a first output 105, indicating that the first material is verified as being the first material, only when the first code matches the second code.

The controller 101 may be implemented as a computer system or controller circuitry comprising hardware alone, have certain aspects in software including firmware alone or can be a combination of hardware and software (including firmware).

The first signal 102 may be received from a data storage device, such as a hard drive, CD-ROM drive, DVD-drive, etc, that is local to the controller or accessed over a network such as the internet. Alternatively, the first signal 102 may be received from a barcode scanner or another device, such as an RFID (radio-frequency identification) tag reader, usable to read data stored on packaging or a container of material. The first signal may comprise the first code only or may comprise other information relating to the material, such as the name of the material, an identification code for the material, a lot number or batch number, an identifier for the manufacturer of the material, the date and place of manufacture, etc. The first code may itself be encoded within the first signal and require decoding before it may be compared with the second code by the controller.

The first code may have been generated by analyzing the first material during a packaging process.

In the present embodiment, the controller is further configured to provide a second output 106 different to the first output 105 when the first code is determined to be different to the second code. The first and second code may be digital codes having the same format as each other and each comprising a plurality of component values that in combination represent a particular type of material, or a particular batch of material. The material may comprise a single compound, or may itself be a prepared formulation comprising a mixture of compounds.

To determine whether the first code 103 matches the second code 104, the controller 101 may compare each component of the first code with each corresponding component of the second code, i.e. the first component of the first code may be compared to the first component of the second code, the nth component of the first code may be compared to the nth component of the second code, etc. The controller 101 may be configured such that it only provides the first output 105 when each component of the first code 103 exactly matches its corresponding component of the second code.

Alternatively the controller may be configured to provide the first output when a number of components of the first code match the corresponding components of the second code. For example, the first output may be provided when a preset percentage of components of the first code match the corresponding components of the second code.

The first output 105 may be provided to audio or visual apparatus to cause audio or visual signals to be presented, so that a person may be assured that the first material is verified as being the first material as required. Alternatively, or in addition, the first output may be provided to mechanical apparatus configured to enable the analysed material to be used. Alternatively or in addition, the controller itself, in response to the generation of the first output may allow a process performed by the controller to proceed.

The second output 106 may be provided to audio or visual apparatus to cause audio or visual signals to be presented, so that a person may be informed that the first material is not verified as being the first material, and therefore the material should not be used. Alternatively, or in addition, the second output may be provided to mechanical apparatus configured to prevent the analysed material from being used. Alternatively or in addition, the controller itself, in response to the generation of the second output may prevent a process performed by the controller from proceeding.

The second code may have been generated by analyzing the first material by subjecting the material to electromagnetic radiation and analyzing electromagnetic radiation received from the material at an analyser. The first material may be irradiated with a broad frequency band of near infrared, and the analyser may form a part of a near infrared spectrometer. The infrared spectrometer may itself be configured to generate the second code, and provide the second code to the controller. In one such example, the spectrometer is of a type supplied under the name Scio via www.consumerphysics.com.

In an alternative example the controller may have received a code that comprises the second code, which the controller processes in order to produce the second code. In a further alternative, a signal provided by a spectrometer is processed by the controller or an alternative processor to generate the second code.

The second code may comprise a string of values relating to electromagnetic intensities (such as infrared intensities) or energy within a plurality of corresponding frequency ranges (such as infrared frequencies). The second code may be generated by the analyser or by the controller in response to receiving a signal from the analyser. For example the analyser may provide a first set of values relating to detected intensities at corresponding infrared frequencies, and the controller may group frequencies within frequency ranges and sum the corresponding intensity values within each of the ranges to generate the second code.

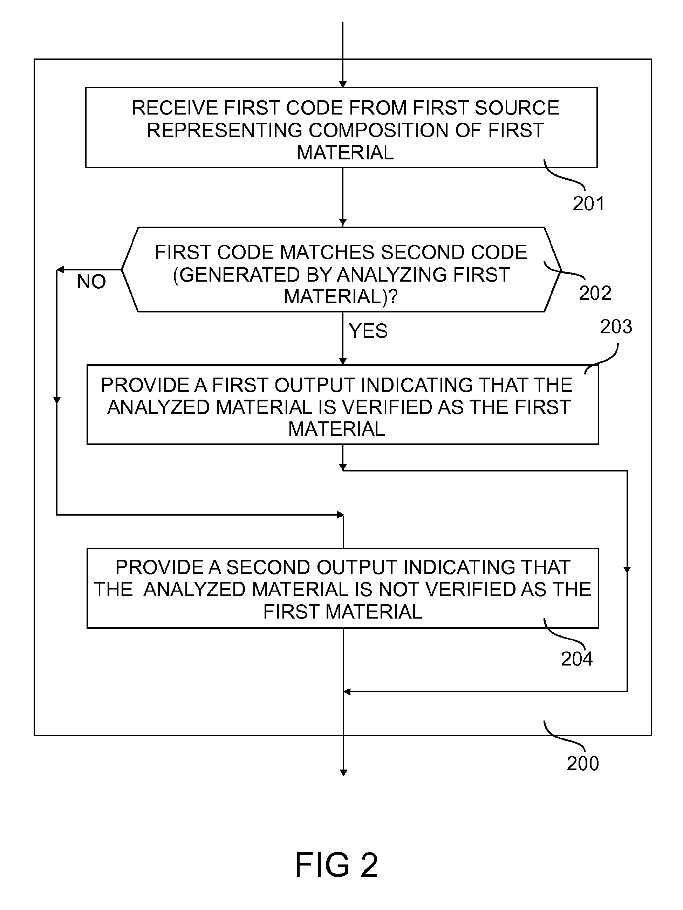

Fig. 2 shows a method 200 comprising receiving a first signal comprising a first code from a first source representing a composition of a first material, comparing the first code to a second code (generated by analysing the first material) to determine if the first code matches the second code, and providing a first output, indicating that the analysed first material is verified as being the first material, only when the first code matches the second code. The method 200 may be performed by the controller 101 of Fig. 1 and may be used to verify that the first material is the required first material before it is used in a production process.

The method 200 comprises, at block 201, receiving the first signal comprising the first code from a first source representing the chemical composition of the first material. At block 202 it is determined whether the first code matches a second code. If it is determined that the first code matches the second code, then process block 203 is performed, otherwise block 204 is performed.

At process block 203 a first output is provided indicating that the analysed material is verified as the first material, whereas at block 204 a second output is provided indicating that the analysed material is not verified as the first material.

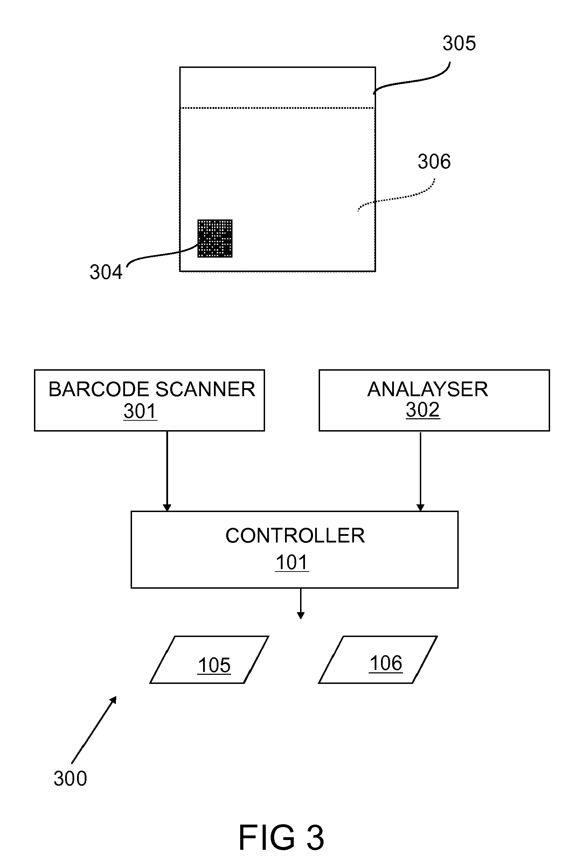

Apparatus 300 comprising the controller 101 is shown in Fig. 3 along with a package 305 of material 306. The apparatus 300 further comprises a barcode scanner 301, which provides first signals comprising the first code to the controller 101, and an analyser 302, which is used to generate the second code and which may comprise a spectrometer as described above.

The barcode scanner 301 may be of a known type usable to scan one-dimensional barcodes, or may be of a type capable of scanning two-dimensional barcodes (or matrix barcodes), such as QR codes. In operation, the barcode scanner 301 is used to scan a barcode, such as barcode 304 to generate the first signal which comprises the first code. Where a two dimensional barcode is used the additional data storage available in such a barcode allows additional information, such as dates relating to the material, to also be included.

The barcode scanner 301 and controller 101, and the analyser 302 and controller 101 may be electrically connected by wire or via a radio communication link.

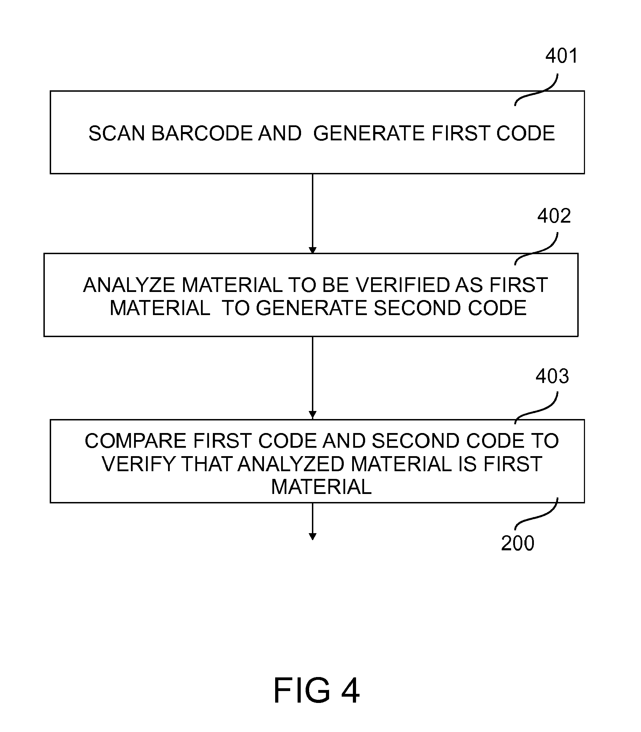

A method 400 of verifying a first material as a required first material is shown in Fig. 4. The method 400 may be performed using the apparatus 301 shown in Fig. 3. At block 401 of the method, a barcode is scanned and the first code is generated. For example, the barcode scanner 301 of Fig. 3 may be used to scan a barcode 304 provided on or within packaging 305 of material 306. In response to scanning the barcode 304, the barcode scanner 301 provides a signal comprising the first code to the controller 101.

Material to be verified as a required first material is analysed at block 402 to generate a second code. For example, the analyser 302 of Fig. 3 may be used to analyse the material 306 to generate a signal defining the second code that is provided to the controller 101.

The first code and the second code are compared at block 403 to verify whether the analysed material is the required first material. Block 403 may comprise the process 200 as described in respect of Fig. 2. Thus, where the first code matches the second code, a first output (105 in Fig. 3), is provided to indicate that the material is verified as the required first material. Where the first code does not match the second code, a second output (106 in Fig. 3), is provided to indicate that the material is not verified as the required first material.

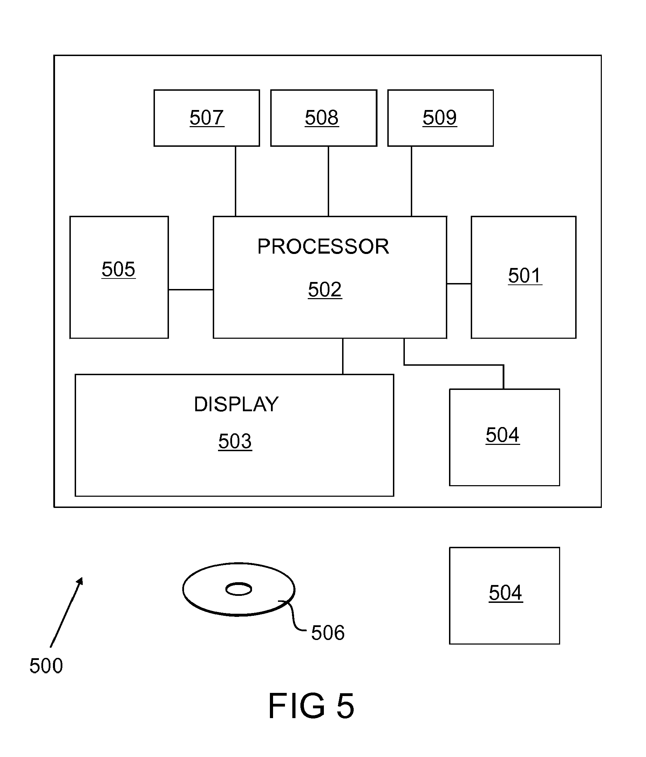

An example apparatus 500 which may be used to perform the method of Fig. 2 is shown in Fig. 5. In the present example, the apparatus 500 comprises a personal computer, which amongst other things, performs the functions described above in respect of the controller 101. The apparatus 500 comprises a memory 501 for storing program instructions and a processor 502 that under the control of instructions stored in a memory device 501 performs the methods as described above in respect of controller 101.

The apparatus 500 further comprises a display 503 for providing visual information to a user. For example, in use the display 503 may be caused to display a list of materials to be used in a production process, and the mass of each material to be used. The display 503 may also be caused to display an indication of the results of a verification process performed in respect of each of the materials presented on the list. For example, the apparatus may receive a signal from a barcode scanner identifying a material, or batch of material, on the list and indicate on the display the material that has been identified in this way. The apparatus may then receive a signal from an analyser, such as the above-described spectrometer, resulting from an analysis of the material, and when the code resulting from the analysis matches the code resulting from the scanning of the barcode, the display may be caused to provide an output indicating to a user that the material is confirmed as being the indicated material on the list.

The apparatus 500 may also comprise one or more user input devices 504, such as mouse, keyboard, keypad, touch pad, touchscreen, etc. for receiving manual inputs from a user. The input device(s) may be integral with the apparatus or external to the apparatus housing.

The apparatus may also comprise one or more reading devices 505 for reading data from a computer readable storage device used to store program instructions. For example, the one or more reading devices 505 may comprise a CD-ROM drive and/or DVD drive, which may be used to read a disk, such as disk 506, and/or a hard disk drive and/or a solid state storage device, to provide the program instruction to the memory 501. In an example, the reading devices 505 may comprise a CD-ROM/DVD drive and a hard disk drive/solid state storage device, and the CD-ROM/DVD drive is used to read a software program and/or data stored on a disk 506, which is then stored on the hard drive/solid state storage device.

The reading devices 505 may also be used to provide the apparatus with one or more stored first code(s) used for the verification process for one or many materials or batches of materials.

The apparatus 500 also has one or more input/output devices, such as input/output devices 507, 508 and 509 for receiving input signals and providing output signals to an analyser device, such as barcode scanner 301 and analyser 302 (shown in Fig. 3) and for providing communication over a network and/or the Internet via a modem (not shown). The input/output devices 507, 508 and 509 may comprise input/output ports to allow electrical connection and/or one or more radio transceivers for providing radio communication, such as by Bluetooth, wireless LAN, etc.

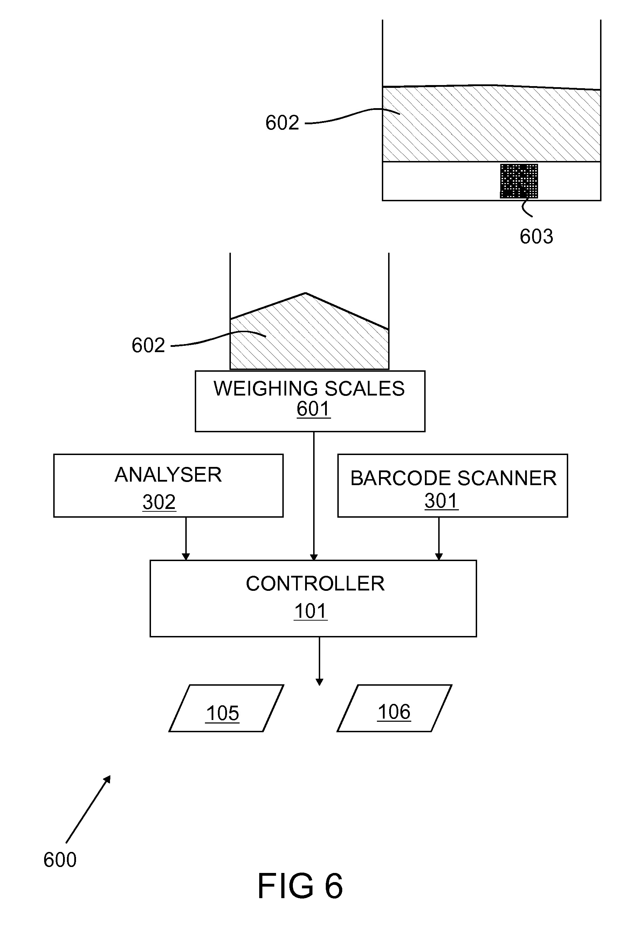

An example of an apparatus 600 for verifying material to be used in a production process is shown in Figure 6. The apparatus 600 may be similar to apparatus 300 described above, but it also comprises weighing scales 601 used to weigh material 602 to be used in a production process. The weighing scales are configured to provide a signal to the controller 101 indicative of the mass of a material 602 being weighed.

The controller 101 may be configured to display a list of materials to be used in a production process, for example, in which the materials are to be mixed together in specific ratios.

The controller 101 may be configured to provide an output to a user indicating the mass of the material on the weighing scales 601. For example, where the controller is embodied as a personal computer, the display of the computer may be caused to provide a visual indication of the mass of the material on the weighing scales 601. The controller may also be configured to provide an indication on the display of the required mass for that material. It may also be configured to provide an indication on the display of whether the current mass is less than, equal to or greater than the required mass for that material.

In an example of the use of the apparatus 600, a user may scan a barcode 603 on packaging of a selected one of the materials on a displayed list of material using the barcode scanner. On receipt of the code generated as a result of scanning the barcode, the controller may identify the material as a first material on the list and provide a display indicating that verification of the identified first material is required. The user may then analyse the selected material using an analyser, such as one of the above-described spectrometers, resulting in a code being generated that is dependent upon the composition of the selected material. The controller may then compare a code obtained from the barcode and the code generated as a result of the analysis to determine whether the two codes match each other, and, if they do, provide a first output 105 to cause the display indicate that the selected material is verified as the required first material. The user may then weigh out the required mass of the selected material.

In the event that the two codes do not match each other, the controller may provide a different second output 106, for example to cause the display to indicate that the selected material has not been verified as the first material. The display may for example instruct the user not to continue the process with the selected material and it may require a supervisor to be called. In an embodiment, the controller may be configured to prevent any further progress with the production process by, for example, not enabling use of the weighing scales.

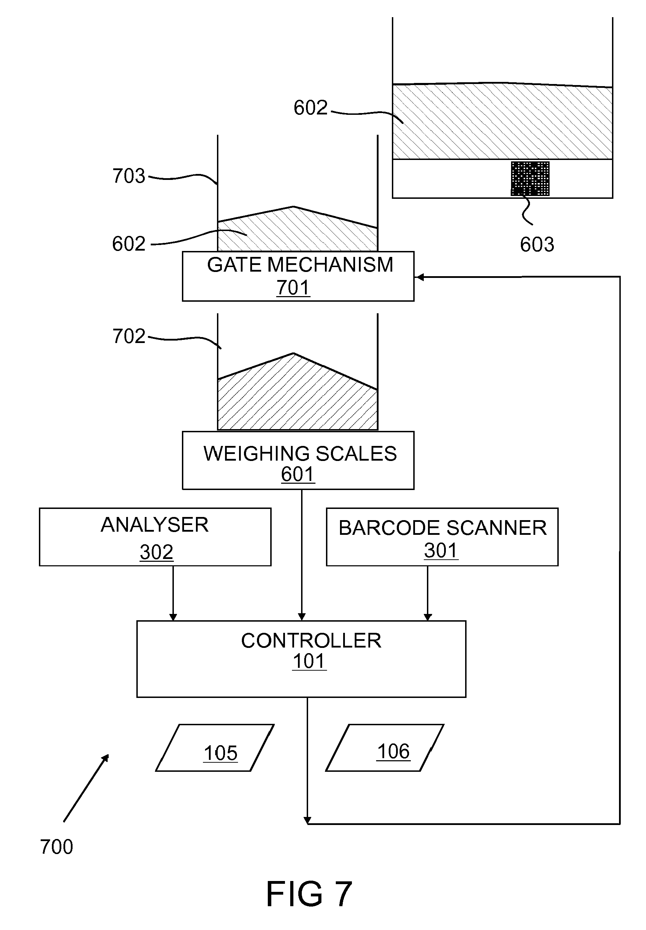

Another example apparatus 700 for verifying material to be used in a production process is shown in Figure 7. The apparatus 700 is like that of apparatus 600, and corresponding features have been labelled accordingly. However, in addition to the features of apparatus 600, the apparatus 700 includes a gate mechanism 701 that is configured to be operable in response to an output from the controller 101. The gate mechanism 701 is movable between a closed position to an open position and from the open position to the closed position under the control of the controller 101. The gate mechanism 701 may be configured to allow passage of material into a mixing vessel 702 in the open position and prevent such passage in the closed position.

In the present example, a receiving vessel 703 is located above the gate mechanism 701. The receiving vessel 703 has an open upper end to allow material 602 to be put in it. The lower end of the receiving vessel 703 is open to the gate mechanism 701, such that when the gate mechanism 701 is open material within the receiving vessel is able to fall out through the gate mechanism, and when the gate mechanism is closed, material is retained in the receiving vessel by the gate mechanism.

The gate mechanism 701 may be configured to move into the open position when the controller 101 provides a first output 105 indicating that a material is verified as a selected first material. In an example, the controller may provide an output to open the gate mechanism only when selected material is verified as the correct material and when the correct mass of material has been weighed.

In an example, the gate mechanism may be arranged between the receiving vessel 703 and the mixing vessel 702 and comprises an electrically operated hinged, or sliding, gate that allows passage of material from the receiving vessel to the mixing vessel in the open position. The analyser 301 may be mounted within the receiving vessel such that it is only able to analyse material that is loaded within the receiving vessel. Thus, in use an operator would be required to load the receiving vessel with material before analyzing the material using the analyser. In this way, only material within the receiving vessel that is about to be mixed can be analysed and verified.

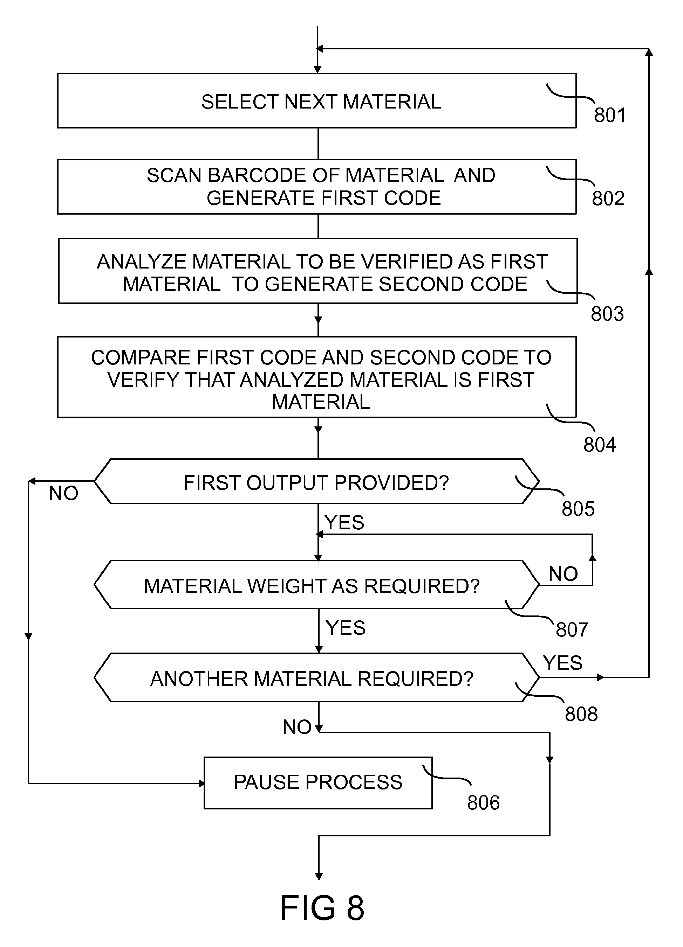

An example of a process for verifying materials to be used in a production process is shown in the flow chart of Fig. 8. Such a process may be performed, for example, by the apparatus of Fig. 6 or Fig. 7. In a first block 801 a material is selected. This may be a first material in a list of materials, or may be a subsequent material in the list of materials.

A barcode provided on, or within packaging, of the selected material is scanned at block 802 resulting in the generation of a first code for the selected material. As described above, the selection (801) itself may be performed by the barcode scanning process, alternatively the selection (801) may be made by the controller or by the manually by the user using a user input device (e.g. 504 of Fig. 5).

The selected material is analysed at block 803 in order to verify that the selected material is the material that is required to be used. The analysis results in a second code being generated, which is then compared to the first code at block 804, to verify whether the analysed material is the required material. i.e. the analysed material is verified as being the material selected at block 801. Block 804 may comprise the process 200 shown in Fig. 2.

At block 805 it is determined whether a first output has been provided at block 804. That is, it is determined whether, for example, the controller 101 has found a match between the codes generated by the barcode scanner 301 and the analyser 302. If a first output is not provided, the process is paused at block 806. If a first output is provided, weighing of the material is enabled and it is determined whether the required mass of material has been weighed at block 807. When the required mass of material has been weighed, it is determined whether another material is required for the production process at block 808. If another material is not required then the process of Fig. 8 is complete, but if it is determined that another material is required, the process returns to block 801 and the next material is selected before blocks 802 to 808 are repeated. Of course, if for any selected material the analysed material is not verified as the required material, then the process is paused at 806.

In an example of the process of Fig. 8, where specific batches of materials are to be verified and used, it is possible that insufficient mass of a particular batch of material will be available. However, in the event that there is insufficient mass of material of a particular batch, the process allows the weighing at block 807 to be interrupted and a second batch of the same type of material to be verified (in accordance with process blocks 802 to 805) before the weighing is resumed at block 807. In this way the process allows a mass of material comprising two or more verified batches of that material to be used.

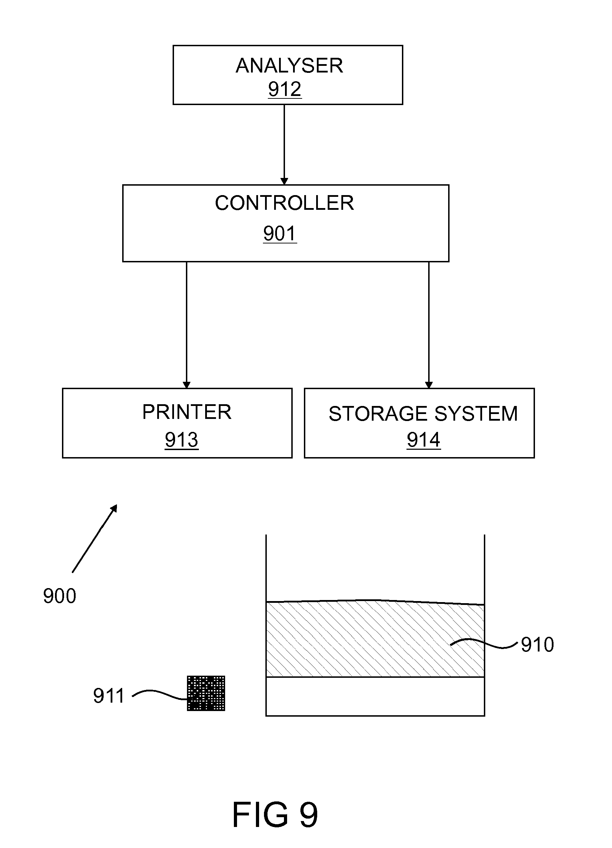

Apparatus 900 comprising a controller 901 configured to process a code dependent upon chemical composition of an analysed material 910 to generate a barcode 911 is shown in Fig. 9. The apparatus 900 is configured to receive a signal from an analyser 912, and the analyser is configured to generate a signal dependent upon chemical composition of an analysed material. The analyser 912 may be a spectrometer, such as a near-infrared spectrometer and may be the same type as analyser 301 described above. In an example, the analyser is a near-infrared spectrometer as supplied under the name Scio via www.consumerphysics.com. The signal provided by the analyser may therefore comprise a first code that is dependent upon the chemical composition of an analysed material. Alternatively, the analyser comprising a spectrometer may provide a signal that is processed by the controller to produce such a first code.

The first code may comprise a string of values relating to electromagnetic intensities (such as infrared intensities) or energy within a plurality of corresponding frequency ranges (such as infrared frequencies). The first code is then processed by the controller to generate a barcode comprising the information of the first code using known techniques for barcode generation. The first code may be generated by the analyser or by the controller in response to receiving a signal from the analyser. For example the analyser may provide a first set of values relating to detected intensities at corresponding infrared frequencies, and the controller may group frequencies within frequency ranges and sum the corresponding intensity values within each of the ranges to generate the first code.

In an example, the barcode may comprise information of the first code only, such that by a subsequent reading of the barcode the first code may be retrieved. In an alternative example, a barcode is generated that comprises the first code and also additional information relating to the analysed material, such as date of production, date of packaging, an identifier identifying the manufacturer, a name of the material, etc. The barcode may comprise a one dimensional barcode or a two dimensional barcode.

The apparatus 900 may also comprise a printer 913 capable of printing barcodes generated by the controller 901. Therefore a barcode may be printed for analysed material. The barcode may be printed onto packaging of the material, or printed separately and attached to or included within such packaging.

The apparatus 900 may comprise means, such as an input/output port, a network card, a radio transceiver, a modem etc. for communication to a storage apparatus 914. The storage system 914 may form a part of the controller 901, it may be directly connected to the controller 901 or it may be accessible by the controller over a network, which may comprise the Internet. The controller 901 may be configured to, in response to the generation of codes following analysis by the analyser 912, store the codes in the storage system 914. The codes may be stored by the controller within the storage system 914 in addition to, or as an alternative to, generating barcodes. As described above, the first codes are dependent on the chemical composition of a type of material, or a specific batch of material. Typically these codes are stored within the storage system 914 within a database that stores each code and at least an associated identifier for the corresponding type of material or batch of material.

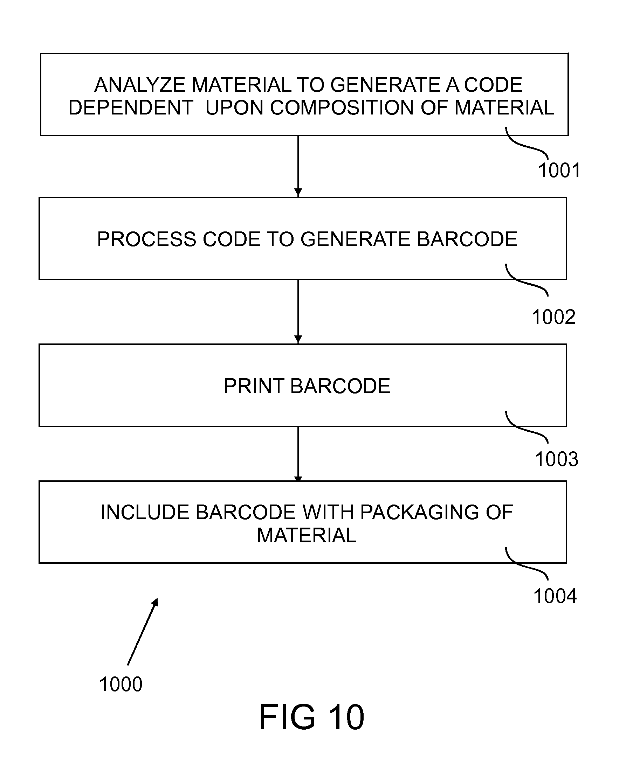

A flow chart outlining a method 1000 of indicating a composition of a material, comprising analysing a batch of material to generate a code dependent upon chemical composition of the material and processing the code to generate a barcode is shown in Fig.10. The method of Fig. 10 may be performed on apparatus such as that of Fig. 9.

Firstly in the method 1000, material is analysed in process block 1001 to generate a first code dependent upon composition of material. The code generated at block 1001 is processed at block 1002 to generate data representing a barcode, and at block 1003 the data is provided to a printer to enable the printer to print a barcode. The barcode printed at block 1003 may be printed directly onto packaging of the analysed material. Alternatively, the barcode printed at block 1003 may be assembled with the packaging at block 1004, such as by sticking the barcode to the packaging or locating the barcode within the packaging.

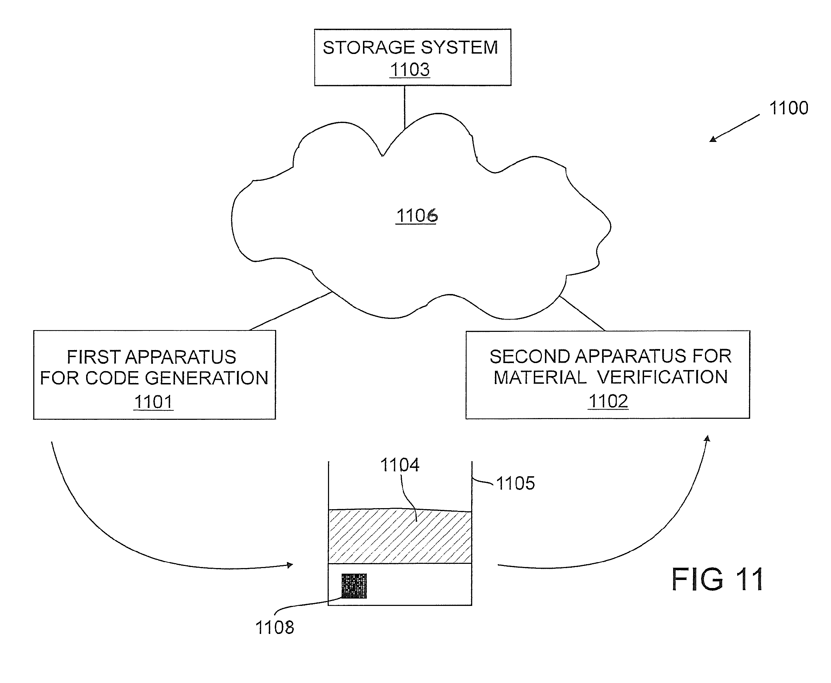

A system 1100 for verifying that a material is a required material is shown in Fig. 11. The system 1100 comprises a first apparatus 1101 configured to generate a first code dependent upon the chemical composition of an analysed material, and a second apparatus 1102 configured to verify a material as a required material. The apparatus 1101 may comprise the apparatus 900 shown in Fig. 9. It is therefore able to analyse a material and generate a barcode 1108 that may be located on or within packaging 1105 of the material. It should be understood that apparatus 1101 is capable of generating a barcode in respect of each of many different types of material and/or for each of many different batches of material, such that the barcode for each material effectively comprises the first code dependent on the chemical composition of the respective material.

In the present example, the first apparatus 1101 is in communication with a storage system 1103, comprising a storage device, via a network, which may comprise the Internet. Thus, as well as recording the first code for a material 1104 in the barcode 1108, the first apparatus 1101 is also able to record the first code, which represents the chemical composition of the material, in a database at the storage system 1103.

The second apparatus 1102 may comprise the apparatus 300 of Fig. 3, the apparatus 600 of Fig. 6 or the apparatus 700 of Fig. 7. Therefore, the second apparatus is capable of scanning the barcode 1108 to obtain the first code that was generated at the first apparatus 1101. In the present example, the second apparatus is also in communication with the storage system 1103 via the network 1106, and therefore it is also able to access the first code via the network. For example the material 1104 may be labelled with a material identifier that may be used to retrieve the first code from a database at the storage system 1103. One advantage of using the barcode 1108 in order to obtain the first code for the material is that it is not reliant upon a connection over the network. A second advantage is that the barcode is clearly physically associated with the material 1104 and therefore the first code is less likely to be confused by a user of apparatus 1102 with the first code of another material.

The second apparatus also comprises an analyser for analyzing the material 1104, as discussed above with respect to Fig. 3. Thus, the apparatus 1102 may be used to verify that the material 1104 is the required material for a production process by obtaining the first code obtained from the barcode 1108 or storage system 1103 and comparing to a second code generated by analyzing the material 1104.

In an example, the analyser of the first apparatus 1101 is the same type of analyser as that of the second apparatus 1102. For example, the first apparatus 1101 may comprise the same type of near infrared spectrometer as the second apparatus 1102.

In an example, the first apparatus 1101 is located at a first location and the second apparatus 1102 is located at different second location. For example, the apparatus 1101 may be located at a first location where the material 1104 is packaged within packaging 1105 and the second apparatus may be located at a second location where the material is to be used within a production process.

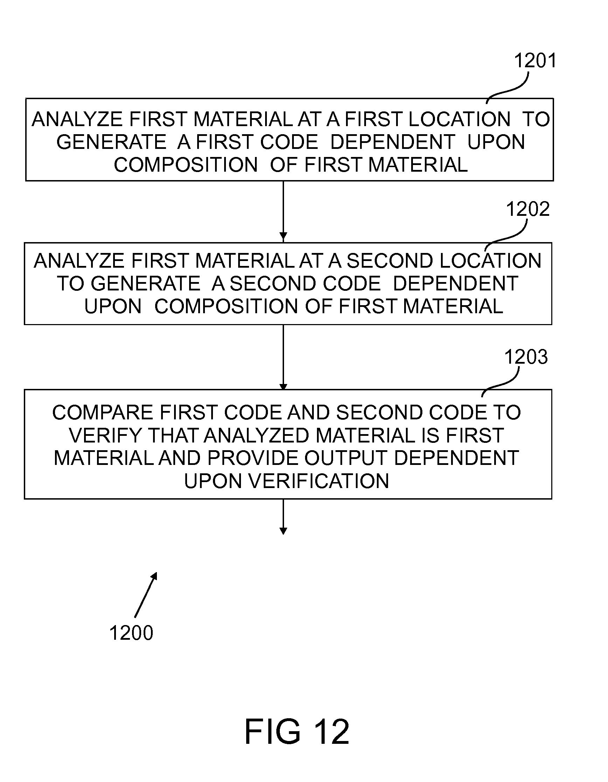

A method of verifying that a selected first material is a required first material is shown in the flowchart of Fig. 12. Such a method may be performed by the system of Fig. 11. At block 1201 a required first material is analysed at a first location to generate a first code dependent upon chemical composition of the required first material. The required first material may be a type of material or a particular batch of a material. At block 1202 a first material is analysed at a second location to generate a second code dependent upon chemical composition of the first material. At block 1203, the first code generated at block 1201 and the second code generated at block 1203 are compared to verify that material analysed at the second location is the required first material. An output is provided that is dependent upon the success of the verification. The process at block 1203 may be the process 200 shown in the flowchart of Fig. 2.

By the process 1200 of Fig. 12, a material to be used in a production process at the location of the second apparatus may be verified as being the correct required material as packaged at the location of the first apparatus. Furthermore, where a material may become altered over time, for example by decay, oxidation, condensation from the atmosphere, contamination by handling, etc., the process 1200 may also verify that the material still comprises the required chemical composition.

The blocks illustrated in the Figs 2, 4, 8, 10, 12 may represent steps in a method and/or sections of code in the computer program, for example stored in memory 501 or on computer readable medium 506 of Fig. 5. The illustration of a particular order to the blocks does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method comprising:
receiving a first signal (102) comprising a first code (103) from a first source (301, 1103), the first code representing a composition of a first material;
comparing the first code to a second code (104), generated by analysing the first material (306, 602), to determine if the first code matches the second code; and
providing a first output (105), indicating that the analysed first material is verified as being the first material, only when the first code matches the second code,
wherein the method comprises enabling weighing of the first material dependent upon the first code matching the second code.

2. A method as claimed in claim 1, wherein the second code (104) is received from equipment (302) configured to analyse materials and generate codes depending upon chemical composition of the materials.

3. A method as claimed in claim 1 or claim 2, wherein the first output indicates that the first material (306, 602) may be mixed with a second material in a mixing process.

4. A method as claimed in any one of claims 1 to 3, wherein the first code (103) is a previously recorded code generated by analysing the first material (306, 602).

5. A method as claimed in claim 4, wherein the previously recorded code is generated at a first location, and the second code (104) is generated at a second location.

6. A method as claimed in any one of claims 1 to 5, wherein the first code (103) is previously recorded in a database and the first code is received from the database, or the first code (103) is previously recorded in a barcode (304, 603, 911, 1108) and the first source is a barcode scanner (301).

7. A method as claimed in claims 1 to 6, wherein the first code (103) is previously recorded in a barcode (304, 603, 911, 1108), the first source is a barcode scanner (301), and the barcode is located on, or within, packaging (305, 1105) of the analysed first material (306, 602).

8. A method as claimed in any one of claims 1 to 7, wherein the first code (103) and the second code (104) are generated by analysing the first material (306, 602) by a process comprising near infrared spectrometry.

9. A method as claimed in any one of claims 1 to 8, wherein the first code (103) is generated at a first location by analyzing a batch of a first material (306, 602), and the first code is dependent upon the chemical composition of the analysed batch of the first material; and
the second code (104) is generated at a second location by analyzing a batch of a first material, and the second code is dependent upon the chemical composition of the analysed batch of the first material.

10. A method as claimed in any one of claims 1 to 9, receiving a signal from weighing scales (601) indicative of a mass of the first material (306, 602) being weighed; and causing a display (503) to provide a visual indication of the mass of the first material being weighed.

11. Apparatus (100, 300, 600, 700), comprising a controller (101) configured to:
receive a first signal comprising a first code (103) from a first source, the first code indicating a composition of a first material (306, 602);
compare the first code to a second code (104), generated by analysing the first material (306, 602), to determine if the first code matches the second code;
provide a first output, indicating that the first material is verified as being the first material, only when the first code matches the second code; and
enable weighing of the first material dependent upon the first code matching the second code.

12. Apparatus as claimed in claim 11, wherein the controller (101) is configured to: receive a signal from weighing scales (601) indicative of a mass of the first material (306, 602) being weighed; and cause a display (503) to provide a visual indication of the mass of the first material.

13. Apparatus as claimed in claim 11 or claim 12, wherein the controller (101) is configured to perform the method of any one of claims 1 to 11.

14. A system (1100) comprising an apparatus (1102) as claimed in any one of claims 11 to 13 and a further apparatus (1101), wherein the further apparatus is configured to generate the first code by analysing the first material.

15. A computer readable storage medium comprising a computer program that when run on a computer performs the method of any one of claims 1 to 10.
